# EUROPEAN PATENT APPLICATION

(11) **EP 4 641 798 A1**
(43) Date of publication of application: **29.10.2025**
(21) Application number: 24777614.9
(22) Date of filing: 29.02.2024
(51) Int. Cl.: H01M 50/293

(54) **BATTERY MODULE AND VEHICLE**

(30) Priority: 27.03.2023 CN 202310312714
(71) Applicant: BYD Company Limited, Shenzhen, Guangdong 518118 (CN)
(72) Inventor: Xing, Weiwei, Shenzhen, Guangdong 518118 (CN); Zhang, Hui, Shenzhen, Guangdong 518118 (CN)
(74) Representative: Aldridge, Henry Alexander
(86) International application number: PCT/CN2024/079377
(87) International publication number: WO 2024/198824

(57) **Abstract**

A vehicle has a battery module. The battery module includes a battery cell, a first material layer, and a second material layer. There are a plurality of battery cells, the plurality of battery cells are successively arranged in a first direction, and the battery cell includes a negative electrode plate, a diaphragm, and a positive electrode plate that are successively stacked in the first direction. Both the first material layer and the second material layer are disposed between two adjacent battery cells, the first material layer is located at an edge of the battery cell, and the second material layer covers at least an intermediate region of the battery cell. Hardness of the first material layer is greater than hardness of the second material layer, and the second material layer has a compressible amount.

## Description

### CROSS-REFERENCE TO RELATED APPLICATIONS

This application claims priority to Chinese Patent Application No. 202310312714.5, filed on March 27, 2023 and entitled "BATTERY MODULE AND VEHICLE", which is incorporated herein by reference in its entirety.

### TECHNICAL FIELD

This application relates to the field of battery technologies, and more specifically, to a battery module and a vehicle.

### BACKGROUND

When a module structure of a lithium-ion square aluminum housing or a pouch battery is designed, battery cells are often assembled through direct contact, by adding a uniform compression barrier in the middle, or by using a specific gap. In the assembly manner of direct contact or adding a barrier in the middle, during a charge-discharge cycle of a battery, because distribution of an electrolyte is uneven when an electrode plate and a diaphragm are subjected to an expansion force, a current density around is significantly higher than that at a middle position, and lithium precipitation occurs at an edge of the electrode plate. If the charge-discharge cycle is performed when a large gap is fully reserved between the battery cells, local lithium precipitation is caused due to gas generation when extrusion is not tight initially.

### SUMMARY

An objective of this application is to provide a new technical solution for a battery module and a vehicle.

According to a first aspect of this application, a battery module is provided, including a battery cell, a first material layer, and a second material layer. There are a plurality of battery cells, the plurality of battery cells are successively arranged in a first direction, and the battery cell includes a negative electrode plate, a diaphragm, and a positive electrode plate that are successively stacked in the first direction. Both the first material layer and the second material layer are disposed between two adjacent battery cells, the first material layer is attached to an edge of the battery cell, and the second material layer covers at least an intermediate region of the battery cell. Hardness of the first material layer is greater than hardness of the second material layer, and the second material layer has a compressible amount.

Optionally, the battery cell is of a square structure, and the first material layer is disposed at least at two opposite edges of the battery cell.

Optionally, the first material layer is annular, and is disposed at four edges of the battery cell.

Optionally, the second material layer is attached to the two adjacent battery cells.

Optionally, the first material layer has an overlapping size of 5 mm to 10 mm with the battery cell from the edge to a center of the battery cell in the first direction.

Optionally, the first material layer overlaps some regions of the positive electrode plate and/or the negative electrode plate in the first direction.

Optionally, the first material layer has an overlapping size of 2 mm to 5 mm with the positive electrode plate or the negative electrode plate.

Optionally, the first material layer is made of silica gel or polyphenylene oxide.

Optionally, an edge of the second material layer is connected to an edge of the first material layer.

Optionally, the second material layer is made of foam or aerogel.

Optionally, the compressible amount of the second material layer is 1% to 4% of a thickness of the battery cell in the first direction.

According to a second aspect of this application, a vehicle is provided, including the battery module according to the first aspect.

According to an embodiment of this application, in the battery module provided in this application, a first material layer and a second material layer are disposed between two adjacent battery cells, the first material layer is disposed at an edge of the battery cell, and the second material layer is disposed at a position that covers a center of the battery cell, so that in a charge-discharge cycle state of the battery module, when an electrode plate and a diaphragm are extruded because the battery cell is subjected to an expansion force, the first material layer with high hardness can exert specific micro pressure on a housing of the battery cell, to avoid local lithium precipitation that occurs when extrusion is not tight initially. However, the second material layer with low hardness can provide specific compression space, to avoid a case that there is less electrolyte in the middle and distribution of the electrolyte around is uneven when the electrode plate is expanded. This reduces lithium precipitation at an edge of the electrode plate due to scattered distribution of a current density, improves a capacity retention rate of the battery module, and optimizes an overall cycling capability of the battery module.

Other features and advantages of this application will become clear from the following detailed description of the exemplary embodiments of this application with reference to the accompanying drawings.

### BRIEF DESCRIPTION OF DRAWINGS

The accompanying drawings which are incorporated in the specification and constitute a part of the specification illustrate embodiments of this application, and are used to explain the principles of this application together with the descriptions of the embodiments.
FIG. 1 is a schematic diagram of a flow direction of an electrolyte inside a battery cell when a battery module is subjected to a force in the related technology;
FIG. 2 is a schematic diagram of a flow direction of an electrolyte in an electrode plate and a diaphragm when a battery module is subjected to a force in the related technology;
FIG. 3 is a schematic structural diagram of a battery module according to this application;
FIG. 4 is a sectional view in a direction A-A in FIG. 3;
FIG. 5 is a diagram of curves of capacity retention rates of battery modules of different structures in a cycle process according to this application; and
FIG. 6 is a schematic diagram of a vehicle according to this application.

Descriptions of reference numerals:
01: housing; 02: polar core; 03: electrolyte; 04: positive electrode plate; 05: negative electrode plate; 06: diaphragm;
1: battery cell 2: first material layer; 3: second material layer; 10: battery module; 100: vehicle.

### DESCRIPTION OF EMBODIMENTS

Various exemplary embodiments of this application are described now in detail with reference to the accompanying drawings. It should be noted that unless otherwise specifically specified, the relative arrangements, numeric expressions, and values of the components and steps described in these embodiments do not limit the scope of this application.

The following descriptions of at least one exemplary embodiment are merely illustrative, and should not be construed as any limitation on this application and implementation or use thereof.

Techniques, methods and devices known to a person of ordinary skill in the relevant art may not be discussed in detail. However, where appropriate, the techniques, methods and devices should be considered as a part of the specification.

In all the examples shown and discussed herein, any specific value should be construed as merely an example and not as a limitation. Therefore, other examples of exemplary embodiments may have different values.

It should be noted that similar reference numerals and letters represent similar items in the following accompanying drawings. Therefore, once a specific item is defined in one of the accompanying drawings, no further discussion thereof is required in the subsequent accompanying drawings.

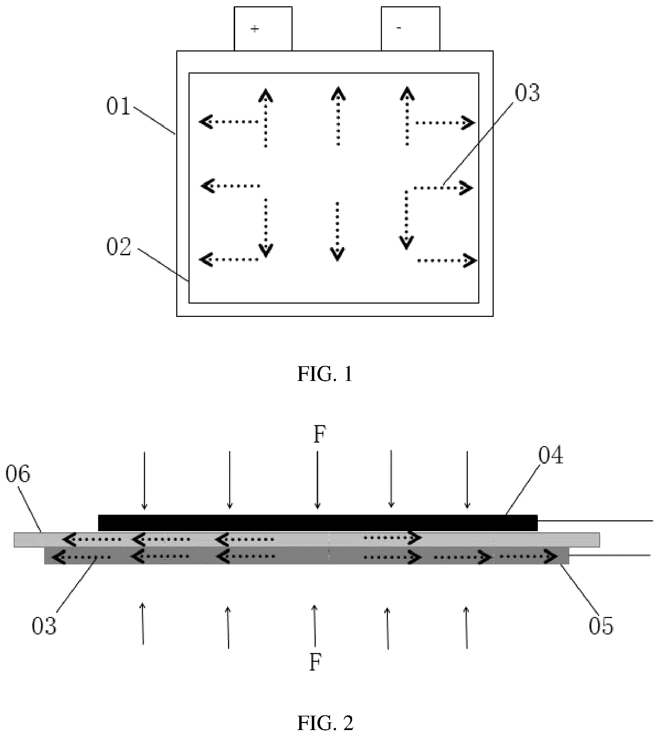

In the related technology, a battery pack or a battery module with a large battery capacity is generally required in the field such as vehicles or energy storage, and the battery pack or the battery module generally includes a plurality of battery cells 1. The battery cell 1 generally includes a polar core 02, an electrolyte 03, and a housing 01 (an aluminum housing) that wraps an exterior of the polar core 02, and the polar core 02 further includes a positive electrode plate 04, a diaphragm 06, and a negative electrode plate 05 that are successively stacked. When module assembly or package structure design is performed for the plurality of battery cells 1, a form of direct contact between the battery cells 1 is generally used, or a layer of uniform and compressible barrier is sandwiched between the battery cells 1. During a charge-discharge cycle of the battery pack or the battery module of such a structure, the battery cells 1 extrude each other due to an expansion force between electrode plates, so that the electrolyte 03 in an intermediate region inside the battery cell 1 diffuses around the battery cell 1. For a flow direction of the electrolyte 03, refer to FIG. 1 and FIG. 2. As a result, the electrolyte 03 is unevenly distributed in the battery cell 1, with less in the middle and more around the battery cell 1. Uneven distribution of the electrolyte 03 causes a current density around the battery cells 1 to be significantly higher than a current density in an intermediate region. Consequently, lithium precipitation occurs at an edge of the electrode plate, affecting cyclic performance and a service life of the battery.

In addition, in the related technology, there is further an assembly mode in which a large gap is reserved between the battery cells 1. However, in such a structure of the battery pack or the battery module, in an initial state of a battery cycle, the battery cells 1 cannot extrude each other tightly and consequently the electrode plates of the battery cells 1 do not extrude each other tightly, causing gas generation between the electrode plates. In this case, local lithium precipitation of the electrode plate still occurs, affecting cyclic performance and a service life of the battery.

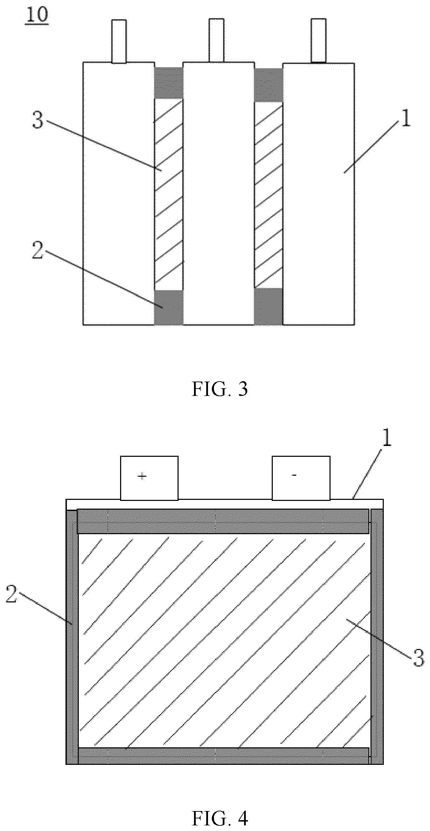

Based on the foregoing problems, as shown in FIG. 3 and FIG. 4, this application provides a battery module 10, including a plurality of battery cells 1, a first material layer 2, and a second material layer 3. The plurality of battery cells 1 are successively arranged in a first direction, and the battery cell 1 includes a negative electrode plate 05, a diaphragm 06, and a positive electrode plate 04 that are successively stacked in the first direction. Both the first material layer 2 and the second material layer 3 are disposed between two adjacent battery cells 1, the first material layer 2 is attached to an edge of the battery cell 1, and the second material layer 3 covers at least an intermediate region of the battery cell 1. Hardness of the first material layer 2 is greater than hardness of the second material layer 3, and the second material layer 3 has a compressible amount.

Specifically, in this application, the battery cells 1 are successively arranged in the first direction, the positive electrode plate 04, the diaphragm 06, and the negative electrode plate 05 in the battery cell 1 are also arranged in the first direction, and a specific gap is reserved between adjacent battery cells 1 for disposing the first material layer 2 and the second material layer 3.

The first material layer 2 is attached to the edge of the battery cell 1, so that during a charge-discharge cycle of the battery module 10, the first material layer 2 with high hardness can exert specific micro pressure on the housing 01 of the battery cell 1, to avoid local lithium precipitation that occurs when extrusion is not tight initially. The second material layer 3 is disposed in an intermediate region that covers at least the battery cell 1, so that during a charge-discharge cycle of the battery module 10, the second material layer 3 with low hardness and a compressible amount can provide specific compression space for expansion of the battery cell 1, and further can be prevented from generating an extrusion force on a region in which the battery cell 1 is easy to expand, thereby avoiding diffusion of the electrolyte around the battery cell, which causes lithium precipitation at an edge of the battery cell.

Optionally, the hardness of the first material layer 2 is set to be greater than the hardness of the second material layer 3, so that the first material layer 2 and the second material layer 3 together can balance an extrusion force at an edge with small expansion deformation and an extrusion force in an intermediate region with large expansion deformation of the battery cell 1 during expansion of the battery cell 1. This avoids diffusion of the electrolyte 03 toward a peripheral edge of the battery, alleviates a problem of scattered distribution of a current density due to uneven distribution of the electrolyte 03, retards lithium precipitation of the electrode plate, further increases a capacity retention rate of the battery module 10 during a charge-discharge cycle, and prolongs a service life of the battery module 10.

According to the foregoing battery module 10 provided in this application, local lithium precipitation of the electrode plate can be avoided, thereby improving cyclic performance and a service life of the battery module 10 during a charge-discharge cycle, so that the battery module 10 is safer and more reliable in actual application. Specific hardness, sizes, material types, and the like of the first material layer 2 and the second material layer 3 may be selected and designed based on an actual requirement. This is not limited in this application. In addition, the edge position of the battery cell 1 and the intermediate region of the battery cell 1 may be understood as relative positions, that is, a disposing position of the first material layer 2 on the battery cell 1 is closer to an outer side than a disposing position of the second material layer 3 on the battery cell 1. A specific position may be arranged based on an expansion status of the battery cell 1.

To make the technical effects of this application clearer, the following provides specific experimental data for reference.

Three groups of battery modules are taken. Two adjacent battery cells 1 of a first group of battery modules come into direct contact with each other, that is, there is no gap between the two adjacent battery cells 1. A layer of aerogel is sandwiched between two adjacent battery cells 1 of a second group of battery modules, and a compressible amount of aerogel is 4% of a thickness of the battery cell. A third group of battery modules are the battery module 10 provided in this application, that is, the first material layer 2 (made of silica gel) is disposed around a peripheral edge of the battery cell 1 between two adjacent battery cells 1, and the second material layer 3 (made of aerogel with a compressible amount being 4% of the thickness of the battery cell) is disposed on an inner side of the first material layer 2.

The foregoing three groups of battery modules are separately sandwiched in a steel clamp in a thickness direction (the first direction) of the battery cell 1, and are separately charged to 4.2 V by using a current that is one multiple of a capacity of the battery cell 1, and laid aside for 30 minutes, and then are discharged to 2.5 V, and laid aside for 30 minutes. After the foregoing charge-discharge cycle is completed once (that is, one cycle), the capacity retention rate of each battery module is detected and recorded, and whether lithium precipitation occurs in each battery module is observed. After a plurality of cycles, the following Table 1 is obtained.

**Table 1:**

| Quantity of cycles | Capacity retention rate (%) | | |
|---|---|---|---|
| | First group | Second group | Third group |
| 0 | 100 | 100 | 100 |
| 100 | 99.2345597604769 | 102.817544110805 | 101.280072946623 |
| 200 | 95.8644841075359 | 101.717010844279 | 100.923230693694 |
| 300 | 94.8352833198186 | 100.812426183744 | 100.415585326506 |
| 400 | 90.4930361868779 | 99.8004724240364 | 99.9526548362208 |
| 500 | 89.6652201420386 | 98.8914140510361 | 99.4906011082275 |
| 600 | 84.8144319791843 | 98.11298808203 | 98.9627902083187 |
| 700 | 73.6072819297292 | 97.2942987008339 | 98.6112085291436 |
| 800 | | 96.4720303496654 | 98.4156905379813 |
| 900 | | 95.2014960094485 | 97.3986462790208 |
| 980 | | 94.6798611359651 | 97.1487690257417 |

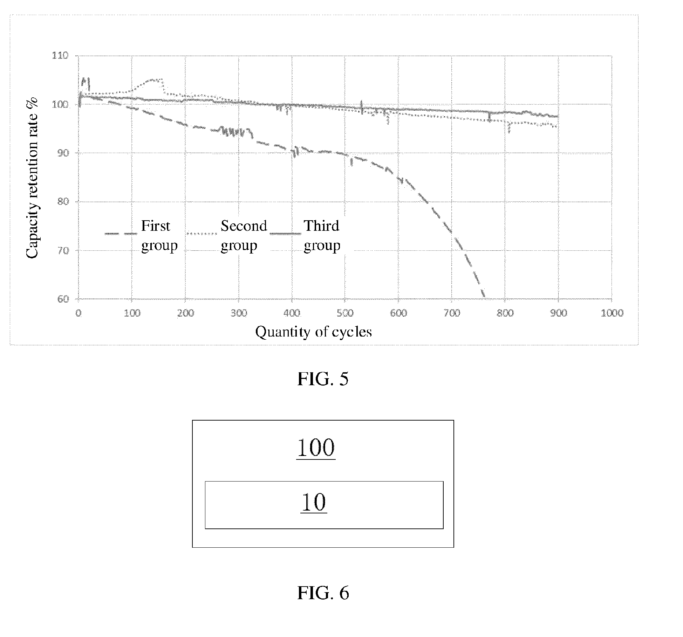

Based on Table 1, a diagram of curves of a capacity retention rate (%) and a quantity of cycles of a battery module shown in FIG. 5 is drawn. It can be learned from Table 1 and FIG. 5 that,
the capacity retention rate of the battery module in the first group decreases rapidly from the beginning of the cycle, and lithium precipitation at the edge of the battery cell 1 is obvious after a plurality of cycles; the capacity retention rate of the battery module in the second group decreases significantly after 400 cycles, and slight lithium precipitation occurs at the edge of the battery cell 1 of the battery module; and the capacity retention rate of the battery module 10 provided in the third group (this application) only slightly decreases after 400 cycles, and can always be kept within a good data range, and there is no lithium precipitation at the edge of the battery cell 1.

This indicates that in the battery module 10 provided in this application, the first material layer 2 with high hardness is sandwiched between edges of two adjacent battery cells 1, and the second material layer 3 with low hardness is disposed in the intermediate region, so that during a charge-discharge cycle of the battery module 10, the first material layer 2 and the second material layer 3 can balance pressure on two sides of the battery cell 1 at the edge and a central region of the battery cell 1, that is, it can be ensured that the electrolyte inside the battery cell 1 does not diffuse around the battery cell. This ensures that a current density in the battery cell 1 is uniform, and lithium precipitation does not easily occur at the edge of the battery cell 1, thereby increasing the capacity retention rate of the battery module 10, and prolonging a service life of the battery module 10.

Optionally, the battery cell 1 is of a square structure, and the first material layer 2 is disposed at least at two opposite edges of the battery cell 1.

Specifically, in this embodiment, the battery cell 1 is designed to be of a square structure, that is, may be designed to be in a rectangle or square form, so as to facilitate mutual arrangement or use. The first material layer 2 may be disposed at only two opposite edges of the square structure, or may be disposed at all four edges, and a set width of the first material layer 2 at each edge may be a same size, or may be different sizes. This may be specifically designed based on an actual use status of the battery cell 1.

Optionally, the first material layer 2 is annular, and is disposed at four edges of the battery cell 1.

Specifically, in this embodiment, the first material layer 2 is disposed in an annular shape at four edges of the square battery cell 1, so that the first material layer 2 evenly distributes pressure around the battery cell 1, to avoid diffusion of the electrolyte inside the battery cell 1 toward a position with slight pressure, so that the electrolyte can be evenly distributed from the edge to the central region of the battery cell 1 and in each edge region, so as to avoid lithium precipitation at the edge of the electrode plate. This increases a capacity retention rate of the battery module 10 in a cycle process, and prolongs a service life of the battery module 10.

Optionally, the second material layer 3 is attached to the two adjacent battery cells 1.

Specifically, in this embodiment, two surfaces of the second material layer 3 in the first direction are separately attached to a side of each of the two adjacent battery cells, so that in actual application, when the battery module 10 is extruded, no gap exists between the two battery cells 1, so as to avoid lithium precipitation that occurs due to gas generation in a gap during the extrusion, thereby further improving the capacity retention rate of the battery module 10.

Optionally, the first material layer 2 has an overlapping size of 5 mm to 10 mm with the battery cell 1 from the edge to a center of the battery cell 1 in the first direction.

Specifically, in this embodiment, if the overlapping size between the first material layer 2 and the battery cell 1 at the edge is excessively large, a part of the electrolyte 03 still flows to a periphery of the battery cell 1 when the battery cell 1 is expanded, resulting in uneven distribution of the electrolyte 03. If the overlapping size between the first material layer 2 and the battery cell 1 is excessively small, the first material layer 2 has insufficient micro pressure on the edge of the battery cell 1 when the battery cell 1 is expanded, which still leads to local lithium precipitation that occurs because gas is generated due to incompact bonding between the electrode plates when extrusion is not tight initially. In this embodiment, the overlapping size between the first material layer 2 and the battery cell 1 is set to 5 mm to 10 mm, for example, 6 mm or 8 mm, so that in a collision process of the battery cell 1, the first material layer 2 does not have an excessive extrusion force near the intermediate region and does not have an insufficient extrusion force at the edge position, thereby further reducing lithium precipitation of the electrode plate, and improving cyclic performance of the battery module 10.

Optionally, the first material layer 2 overlaps some regions of the positive electrode plate 04 and/or the negative electrode plate 05 in the first direction.

Specifically, in this embodiment, the first material layer 2 has an overlapping region with the positive electrode plate 04 and/or the negative electrode plate 05 in the first direction, that is, at least a part of the first material layer 2 is pressed on the electrode plate (the positive electrode plate 04 and/or the negative electrode plate 05), so that during a charge-discharge cycle of the battery module 10, the first material layer 2 and the second material layer 3 balance pressure at the edge and pressure in the central region of the battery cell 1 in the first direction through adjustment of the overlapping size between the first material layer 2 and the electrode plate, to prevent the electrolyte in the central region of the electrode plate from flowing to a periphery of the electrode plate, so that a current density is more uniform.

Optionally, the first material layer 2 has an overlapping size of 2 mm to 5 mm with the positive electrode plate 04 or the negative electrode plate 05.

Specifically, in this embodiment, the positive electrode plate 04, the diaphragm 06, and the negative electrode plate 05 are stacked inside the battery cell 1. In a battery expansion process, the electrolyte 03 generally diffuses from a position between the diaphragm 06 and the negative electrode plate 05 to a periphery. Referring to FIG. 2, a size of the diaphragm 06 is generally greater than sizes of the negative electrode plate 05 and the positive electrode plate 04, so as to avoid a short circuit between the positive electrode plate 04 and the negative electrode plate 05. In this application, the first material layer 2 is disposed to overlap the positive electrode plate 04 or the negative electrode plate 05 by 2 mm to 5 mm, that is, the first material layer 2 can have slight pressure on a size of 2 mm to 5 mm at an edge of the positive electrode plate 04 or the negative electrode plate 05, so as to ensure that the first material layer 2 and the second material layer 3 can balance extrusion forces on the diaphragm 06 and the negative electrode plate 05, so that the electrolyte 03 is evenly distributed.

Optionally, the first material layer 2 is made of silica gel or polyphenylene oxide.

Specifically, in this embodiment, the first material layer 2 is generally made of a hard material, for example, silica gel or polyphenylene oxide (ppo). The silica gel has specific softness, so that when the silica gel is disposed between the battery cells 1, extrusion damage to the battery cells 1 by the silica gel when the battery cells 1 are expanded can be avoided, thereby improving safety performance of the battery cell 1. In addition, the silica gel has specific hardness, so that the first material layer 2 can provide a specific extrusion force on the edge of the battery cell 1. Both the silica gel and the polyphenylene oxide have good electrical insulation performance, so that a short circuit between the battery cells 1 can be avoided, thereby further improving safety performance of the battery module 10.

Optionally, an edge of the second material layer 3 is connected to an edge of the first material layer 2.

Specifically, in this embodiment, the second material layer 3 is disposed on an inner side of the first material layer 2, and is connected to the first material layer 2, that is, the second material layer 3 may be disposed on a remaining position of the battery cell 1 in which the first material layer 2 is not disposed, so that an extrusion force to which the entire battery cell 1 is subjected can be relatively balanced during expansion, thereby further avoiding local lithium precipitation or gas generation, and improving performance and a service life of the battery.

Optionally, the second material layer 3 is made of foam or aerogel.

Specifically, the second material layer 3 may be made of a material that has a specific compressible deformation amount, to provide specific expansion space while enabling the electrode plates to be closely attached to each other. Both the foam and the aerogel are commonly used compressible materials, which have low costs and good electrical insulation performance, thereby reducing manufacturing costs, and improving safety of the battery module 10.

Optionally, the compressible amount of the second material layer 3 is 1% to 4% of a thickness of the battery cell 1 in the first direction.

Specifically, in this embodiment, the compressible amount of the second material layer 3 may be designed based on the thickness of the battery cell 1 in the first direction, that is, by referring to a thickness of the stacked electrode plates. If the compression amount of the second material layer 3 is excessively large, a large gap exists between the two adjacent battery cells 1. As a result, the electrode plates are not closely attached to each other. If the compression amount of the second material layer 3 is excessively small, the electrolyte 03 in the middle of the battery cell 1 still diffuses around, causing a poor effect for resolving lithium precipitation. In this application, the compressible amount of the second material layer 3 is limited to 1% to 4% of the thickness of the battery cell 1, for example, 2% or 3%, so that an extrusion force of the second material layer 3 on the battery cell 1 can be selected and adjusted based on the thickness of the battery cell 1, thereby further ensuring cyclic performance of the battery module 10.

Optionally, the first material layer 2 and the second material layer 3 are adhered to the battery cell 1 by using glue.

Specifically, in actual production, the first material layer 2 and the second material layer 3 may be adhered to the battery cell 1, so that the first material layer 2, the second material layer 3, and the battery cell 1 form an integral structure, and then subsequent module assembly is performed, thereby improving convenience of assembly. In addition, the first material layer 2 and the second material layer 3 are bonded and fixed by using glue, so that in a charge-discharge process of the battery module 10, positions of the first material layer 2 and the second material layer 3 do not change due to expansion of the battery cell 1, thereby improving structural reliability.

As shown in FIG. 6, a vehicle 100 according to this application includes the battery module 10 in the foregoing embodiments.

Specifically, a power source of the vehicle 100 provided in this application may use the battery module 10 provided in any one of the foregoing embodiments of this application. Because the battery module 10 provided in this application has better cyclic performance and a longer service life, safety and reliability of the vehicle 100 during driving are higher. In addition, the service life of the battery module 10 is long, so that frequent replacement of the power source is avoided, thereby reducing use costs of the vehicle 100, and improving use experience.

An emphasis in the foregoing embodiments is to describe differences between the embodiments, and different optimization features between the embodiments may be combined to form better embodiments provided that there is no contradiction. For brevity, details are not described herein again.

Although some specific embodiments of this application have been described in detail by using examples, a person skilled in the art should understand that the foregoing examples are merely for description, and are not intended to limit the scope of this application. A person skilled in the art should understand that modifications may be made to the foregoing embodiments without departing from the scope and spirit of this application. The scope of this application is defined by the appended claims.

## Claims

1. A battery module (10), comprising:
a plurality of battery cells (1), wherein the plurality of battery cells (1) are successively arranged in a first direction, and the battery cell (1) comprises a negative electrode plate (05), a diaphragm (06), and a positive electrode plate (04) that are successively stacked in the first direction; and
a first material layer (2) and a second material layer (3), wherein both the first material layer (2) and the second material layer (3) are disposed between two adjacent battery cells (1), the first material layer (2) is attached to an edge of the battery cell (1), and the second material layer (3) covers at least an intermediate region of the battery cell (1), wherein
hardness of the first material layer (2) is greater than hardness of the second material layer (3), and the second material layer (3) has a compressible amount.

2. The battery module (10) according to claim 1, wherein the battery cell (1) is of a square structure, and the first material layer (2) is disposed at least at two opposite edges of the battery cell (1).

3. The battery module (10) according to claim 2, wherein the first material layer (2) is annular, and is disposed at four edges of the battery cell (1).

4. The battery module (10) according to any one of claims 1 to 3, wherein the second material layer (3) is attached to the two adjacent battery cells (1).

5. The battery module (10) according to any one of claims 1 to 4, wherein the first material layer (2) has an overlapping size of 5 mm to 10 mm with the battery cell (1) from the edge to a center of the battery cell (1) in the first direction.

6. The battery module (10) according to any one of claims 1 to 4, wherein the first material layer (2) overlaps some regions of the positive electrode plate (04) and/or the negative electrode plate (05) in the first direction.

7. The battery module (10) according to claim 6, wherein the first material layer (2) has an overlapping size of 2 mm to 5 mm with the positive electrode plate (04) or the negative electrode plate (05).

8. The battery module (10) according to any one of claims 1 to 7, wherein the first material layer (2) is made of silica gel or polyphenylene oxide.

9. The battery module (10) according to any one of claims 1 to 8, wherein an edge of the second material layer (3) is connected to an edge of the first material layer (2).

10. The battery module (10) according to any one of claims 1 to 9, wherein the second material layer (3) is made of foam or aerogel.

11. The battery module (10) according to any one of claims 1 to 10, wherein the compressible amount of the second material layer (3) is 1% to 4% of a thickness of the battery cell (1) in the first direction.

12. A vehicle (100), comprising the battery module (10) according to any one of claims 1 to 11.
